# EUROPEAN PATENT APPLICATION

(11) **EP 4 245 558 A1**
(43) Date of publication of application: **20.09.2023**
(21) Application number: 21890989.3
(22) Date of filing: 29.10.2021
(51) Int. Cl.: B42D 25/30, B42D 25/328, B42D 25/324, B42D 25/40

(54) **OPTICAL ANTI-COUNTERFEITING ELEMENT, MANUFACTURING METHOD THEREFOR, AND ANTI-COUNTERFEITING PRODUCT**

(30) Priority: 11.11.2020 CN 202011255955
(71) Applicant: Zhongchao Special Security Technology Co., Ltd, Beijing 100070 (CN); China Banknote Printing and Minting Corp., Beijing 100044 (CN)
(72) Inventor: HU, Chunhua, Beijing 100070 (CN); ZHU, Jun, Beijing 100070 (CN); ZHANG, Yiheng, Beijing 100070 (CN); FENG, Minyu, Beijing 100070 (CN)
(74) Representative: Glawe, Delfs, Moll
(86) International application number: PCT/CN2021/127488
(87) International publication number: WO 2022/100462

(57) **Abstract**

Provided are an optical anti-counterfeiting element, a manufacturing method thereof, and an anti-counterfeiting product. The optical anti-counterfeiting element includes an undulating structure layer (2) including a first surface and a second surface opposite to each other, the second surface including a first area A and a second area B, the first area A has a first microstructure, the second area B has a second microstructure, and the first microstructure is different from the second microstructure; a first reflective layer (3), located in the first area A; and a second reflective layer (5), located at least in the second area B, when observing from one side of the first surface, the first area A and the second area B has visual features presented by the first reflective layer (3) and the second reflective layer (5) respectively. The optical anti-counterfeiting element is partitioned by the undulating structure layer, and the different reflective layers are correspondingly provided in the areas, such that when viewed from the other side of the undulating structure layer by a user, the different areas present the visual features of the corresponding reflective layers, thereby improving anti-counterfeiting capability.

## Description

### Technical Field

The present invention relates to the technical field of various types of high-security or high-value-added printed matter such as banknotes, cards and product packaging, in particular to an optical anti-counterfeiting element and a manufacturing method thereof, and an anti-counterfeiting product with the anti-counterfeiting element.

### Background

In order to prevent counterfeiting by means of scanning and copying, optical anti-counterfeiting elements such as security threads, bars or labels are widely used in various types of high-security or high-value-added printed matter such as banknotes, cards and product packaging. A variety of anti-counterfeiting technologies are adopted for the optical anti-counterfeiting elements. Among them, holographic anti-counterfeiting technology is the most common anti-counterfeiting technology at present, for example, windowed security threads of China's fifth RMB series (2005 edition) except for 1-yuan banknotes, and ID cards, driving licenses, passports and other important documents in China.

With the increasing popularity of diffraction optical image technology, this technology has also been widely used in the civil packaging industry, such as packaging of cigarettes, wine and drugs, and even labels of textiles and toys have adopted this technology, which also makes the anti-counterfeiting performance of this technology worse and worse.

With the adoption of Motion security threads on the new edition of U.S. dollar banknotes, the anti-counterfeiting industry has great interest in this new-type micro lens array technology, which is an anti-counterfeiting technology with dynamic features or with a depth-of-field effect based on a Moire amplification effect of a micro lens array on a micrographic array, that is, the micro lens array may sample and synthesize the micrographic array to form an image. This technology requires sufficient contrast in color or brightness between a micrographic area and a micrographic background area. The patent document CN200680062431.9 discloses a method of producing micrographics by squeegeeing, that is, an undulating structure layer with an iconic depression structure is formed firstly, and is then integrally coated with radiation-curable ink with a certain thickness, then ink outside the depression structure is removed with a squeegee, and finally the radiation-curable ink in the depression structure is radiation-cured with a certain dose of radiation source. The difficulty of this method is that it is difficult for the squeegee to remove ink from the micrographic background area completely, in particular, for large-width film rolls (for example, being 1m wide), it is difficult to control the lateral uniformity. Meanwhile, the method may only achieve manufacturing of micrographics with particular colors, but not micrographics that present different color features depending on a viewing angle. The patent document US20030179364 discloses manufacturing of black micrographics using microstructures with a high depth-to-width ratio. This method is simple in process and highly feasible, but poor in color effect, and may not achieve producing of color graphics with high brightness and high saturation or color-shifting micrographics.

Therefore, a method for producing high-contrast and high-saturation micrographic arrays with high efficiency is needed.

### SUMMARY

In order to solve the above-mentioned technical problems, an object of the present invention is to provide an optical anti-counterfeiting element, a manufacturing method thereof, and an anti-counterfeiting product.

Some embodiments of the present invention provide an optical anti-counterfeiting element. The optical anti-counterfeiting element includes: an undulating structure layer, a surface of the undulating structure layer is in an undulating shape. The undulating structure layer includes at least two areas, and different reflective layers are correspondingly arranged in the areas on the surface in the undulating shape, such that when observing from the other surface of the undulating structure layer, the different areas present visual features of the corresponding reflective layers.

In some embodiments of the present invention, the undulating structure layer includes:
a first area, including a first microstructure; and a second area, including a second microstructure. The first area is provided with a first reflective layer, and the second area is provided with a second reflective layer, such that when observing from the other surface of the undulating structure layer, the first area has visual features presented by the first reflective layer, and the second area has visual features presented by the second reflective layer.

In some embodiments of the present invention, at least one of the first area and the second area includes a pattern with a line or a dot, and a width of the line or a diameter of the dot is less than 0.25mm.

In some embodiments of the present invention, the first reflective layer is located in the first area, and the second reflective layer is located at least in the second area.

In some embodiments of the present invention, a specific volume of the first microstructure is less than a specific volume of the second microstructure.

In some embodiments of the present invention, the first microstructure or the second microstructure is: at least one of a periodic structure and an aperiodic structure; and a cross-sectional structure of the first microstructure or the second microstructure along an extension direction is: at least one of a sinusoidal structure, a rectangular grating structure, a trapezoidal grating structure, a blazed grating structure and an arc grating structure.

In some embodiments of the present invention, the specific volume of the first microstructure ranges from 0µm³/µm² to 0.5µm³/µm²; and the specific volume of the second microstructure ranges from 0.4µm³/µm² to 2µm³/µm².

In some embodiments of the present invention, the first reflective layer is formed by a vapor deposition process, and a material of the first reflective layer is at least one of aluminum, silver, copper, tin, chromium, nickel and titanium.

In some embodiments of the present invention, a thickness of the first reflective layer ranges from 10nm to 80nm.

In some embodiments of the present invention, the first reflective layer is a multilayer interference optically variable coating.

In some embodiments of the present invention, the second reflective layer or a sublayer of the second reflective layer is formed by a wet coating process.

In some embodiments of the present invention, the multilayer interference optically variable coating includes a mirror layer, a dielectric layer and an absorption layer, and the absorption layer is arranged adjacent to the undulating structure layer; a material of the mirror layer includes at least one of aluminum, silver, copper, tin, chromium, nickel and titanium; a material of the dielectric layer includes at least one of MgF₂, SiO₂, ZnS, TiN, TiO₂, TiO, Ti₂O₃, TisOs, Ta₂O₅, Nb₂O₅, CeO₂, Bi₂O₃, Cr₂O₃, Fe₂O₃, HfO₂ and ZnO; and the absorption layer includes at least one of nickel, chromium, aluminum, silver, copper, tin and titanium.

In some embodiments of the present invention, the second reflective layer is a coating formed by a metallic ink.

In some embodiments of the present invention, the metallic ink is an optically variable ink.

In some embodiments of the present invention, the second reflective layer is a coating formed by a mixture of the metallic ink and a color pigment.

In some embodiments of the present invention, a metallic pigment of the metallic ink is an aluminum microchip.

In some embodiments of the present invention, an average diameter of a pigment flake particle of the metallic ink is less than a width of a cross-section of the second microstructure.

In some embodiments of the present invention, the average diameter of the pigment flake particle of the metallic ink is less than 10µm.

In some embodiments of the present invention, the second reflective layer is a multilayer structure, and includes a color ink layer sublayer and a reflective layer sublayer, and the color ink layer sublayer is formed by a wet coating process.

In some embodiments of the present invention, a surface of a color ink layer away from the undulating structure layer corresponds to the undulating shape of the surface of the undulating structure layer.

In some embodiments of the present invention, the color ink layer sublayer is applied in an amount ranging from 0.1g/m² to 1g/m².

Some other embodiments of the present invention provide an anti-counterfeiting product. The anti-counterfeiting product includes the above-mentioned optical anti-counterfeiting element.

Still some other embodiments of the present invention provide a manufacturing method of the optical anti-counterfeiting element. The manufacturing method includes: forming an undulating structure layer, the undulating structure layer at least includes a first area formed by a first microstructure, and a second area formed by a second microstructure, a specific volume of the first microstructure is less than a specific volume of the second microstructure; forming a first reflective layer located in the first area but not in the second area; and forming a second reflective layer located at least in the second area, the second reflective layer or a sublayer of the second reflective layer is formed by a wet coating process.

In some embodiments of the present invention, the forming the first reflective layer located in the first area but not in the second area further includes: forming a material of the first reflective layer on the undulating structure layer by a vapor deposition; forming a protective layer on the material of the first reflective layer; and placing an obtained semi-finished product into an atmosphere capable of reacting with the material of the first reflective layer to remove all or a part of the material of the first reflective layer located in the second area.

In some embodiments of the present invention, after the forming the second reflective layer located at least in the second area, the second reflective layer or a sublayer of the second reflective layer is formed by a wet coating process, the manufacturing method further includes: continuing a procedure of applying other inorganic or organic coatings to achieve other optical anti-counterfeiting functions or assisting functions.

With the above-mentioned technical solutions, the embodiments of the present invention mainly provide the optical anti-counterfeiting element, the optical anti-counterfeiting element is partitioned by the undulating structure layer, and different reflective layers are correspondingly arranged in the corresponding areas, such that when observing from the other surface of the undulating structure layer by users, different areas present visual features of the corresponding reflective layers, thereby improving anti-counterfeiting capability.

Other features and advantages of the embodiments of the present invention will be described in detail in the following detailed description.

### Brief Description of the Drawings

The accompanying drawings, which are intended to provide a further understanding of the embodiments of the present invention and constitute a part of the specification, serve to explain the embodiments of the present invention together with the following description, but do not constitute a limitation on the embodiments of the present invention. In the figures:
Fig. 1 is a top view of an optical anti-counterfeiting element according to an embodiment of the present invention;
Fig. 2 is a cross-sectional view of the optical anti-counterfeiting element shown in Fig. 1 along X-X;
Fig. 3 is another cross-sectional view of the optical anti-counterfeiting element shown in Fig. 2 along X-X;
Fig. 4 is a structural schematic diagram of step S1 of a manufacturing method of an optical anti-counterfeiting element according to an embodiment of the present invention;
Fig. 5 is a structural schematic diagram of step S2 of a manufacturing method of an optical anti-counterfeiting element according to an embodiment of the present invention;
Fig. 6 is a structural schematic diagram of step S2-2 of a manufacturing method of n optical anti-counterfeiting element according to an embodiment of the present invention;
Fig. 7 is a structural schematic diagram of step S2-3 of a manufacturing method of an optical anti-counterfeiting element according to an embodiment of the present invention;
Fig. 8 is a structural schematic diagram of step S3 of a manufacturing method of an optical anti-counterfeiting element according to an embodiment of the present invention;
Fig. 9 is another cross-sectional view of the optical anti-counterfeiting element shown in Fig. 1 along X-X according to Embodiment 2 of the present invention; and
Fig. 10 is another cross-sectional view of the optical anti-counterfeiting element shown in Fig. 1 along X-X according to Embodiment 3 of the present invention.

Description of reference numerals:
1. Substrate layer; 2. Undulating structure layer;
3. First reflective layer; 4. Protective layer;
5. Second reflective layer; 6. Functional coating;
51. Color sublayer; and 52. Reflective sublayer.

### Detailed Description of the Embodiments

In the following description, for purposes of explanation and not limitation, specific details, such as particular system structures and technologies, are set forth in order to provide a thorough understanding of the embodiments of the present invention. However, it will be apparent to a person skilled in the art that the present invention may be practiced in other embodiments that depart from these specific details. In other instances, detailed descriptions of well-known systems, devices, circuits, and methods are omitted so as not to obscure the description of the present invention with unnecessary details.

The specific implementations of the embodiments of the present invention are described in detail below in conjunction with the accompanying drawings. It should be understood that the embodiments described herein are merely illustrative and explanatory of the embodiments of the present invention, and are not restrictive of the embodiments of the present invention.

Reference to "and/or" throughout this text is meant to include three concurrent solutions, for example, "A and/or B", which includes solution A, or solution B, or solutions where both A and B are satisfied. In addition, the technical solutions of the various embodiments may be combined with each other, but must be realizable by a person of ordinary skill in the art. When the combination of technical solutions is contradictory or may not be realized, it should be considered that the combination of technical solutions does not exist and is not within the scope of protection claimed by the present invention.

In order to make those skilled in the art better understand the technical solutions of the present invention, an optical anti-counterfeiting element and a manufacturing process thereof according to the present invention will be described in detail with reference to the accompanying drawings.

### Embodiment 1

Embodiment 1 of the present invention provides shape features of an optical anti-counterfeiting element, and it should be understood that this embodiment serves only as an example for the optical anti-counterfeiting element, and does not limit the appearance and specific graphic content of the optical anti-counterfeiting element.

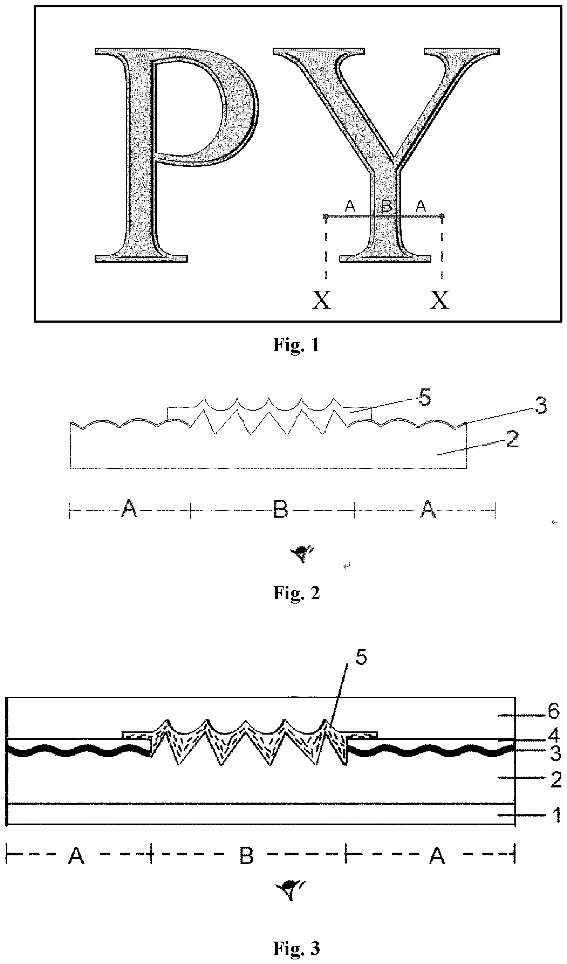

Referring to Fig. 1, Fig. 1 is a top view of an optical anti-counterfeiting element according to the present invention. The optical anti-counterfeiting element includes a first area A presenting an effect of a first reflective layer, and a second area B presenting an effect of a second reflective layer. In an embodiment, the first area A presents an aluminum silver color, and the second area B presents a gold color. Meanwhile, the first area A has a particular optical effect presented by a first microstructure, and the second area B has another particular optical effect presented by a second microstructure.

It should be understood that the first area A and the second area B are distinguished based on the first microstructure and the second microstructure, as illustrated in the following embodiments, which is not illustrated too much in the embodiment of the present invention.

In the embodiment of the present invention, the first area A and the second area B are presented by means of a preset pattern or image background, the pattern is presented in a form of including a line or a dot, or a combination of both. For example, as shown in Fig. 1, the second area B is letters of "PY" having an embossed optical effect.

Further, in the first area A or the second area B illustrated in the embodiment of the present invention, an anti-counterfeiting effect is increased by improving a fineness of an image line, for example, the image line is less than 0.25mm, or even less than 0.05mm. The first area A is also set with other optical effects, such as holography, to be visually distinguished from the second area B, thereby increasing the anti-counterfeiting effect.

### Embodiment 2

Embodiment 2 of the present invention provides a specific structural composition of the optical anti-counterfeiting element.

Referring to Figs. 1-2, Fig. 2 is a cross-sectional view of the optical anti-counterfeiting element shown in Fig. 1 along X-X according to the embodiment of the present invention.

In the embodiment of the present invention, the optical anti-counterfeiting element includes an undulating structure layer 2, a surface of the undulating structure layer 2 is in an undulating shape. Specifically, a back side of user vision is in the undulating shape, that is, a side of the optical anti-counterfeiting element is in the undulating shape away from the user vision.

Further, the undulating structure layer 2 includes at least two areas, and different reflective layers are correspondingly arranged in the areas on the undulating surface in the undulating shape, such that when observing from the other surface of the undulating structure layer 2, the different areas present visual features of the corresponding reflective layers.

In an embodiment, the undulating structure layer 2 includes two areas corresponding to Embodiment 1, that is, a first area A formed by a first microstructure (for example, a microstructure presenting a holographic effect), and a second area B adjacent to the first area and formed by a second microstructure (for example, a microstructure presenting an embossed effect). A specific volume of the first microstructure is less than a specific volume of the second microstructure.

It should be understood that the specific volume refers to a volume occupied by a substance per unit mass. In the embodiment of the present invention, it is limited that the first microstructure included in the first area A occupies a smaller volume per unit mass than the second microstructure, but specific shapes and percentages of the first area A and the second area B are not predetermined and are set according to product requirements.

The optical anti-counterfeiting element further includes a first reflective layer 3 corresponding to the first area A, and a second reflective layer 5 corresponding to the second area B. When observing from a non-undulating side of the undulating structure layer 2, the first reflective layer 3 is strictly located in the first area A, and the second reflective layer 5 is strictly located in the second area B. Thus, users will view that the first area A of the undulating structure layer 2 presents optical features of the first reflective layer 3 and the second area B presents optical features of the second reflective layer 5.

In an embodiment, the second reflective layer 5 is a metallic ink coating with a different visual effect from the first reflective layer 3, and the metallic ink coating is formed by a wet coating process.

Further, when the second reflective layer 5 is the metallic ink coating, an area where the second reflective layer 5 is located needs to be greater than the second area B to ensure that the second reflective layer 5 is located on the whole first microstructure of the second area B. The metallic ink coating generally includes a metallic flake particle pigment (for example, a metallic pigment presenting a gold color) and a resin binder. The metallic flake particle pigment is basically parallel to an inclined plane of the second microstructure, so that a desired microstructure optical effect is able to be formed.

Further, the second reflective layer 5 is a result of natural leveling of liquid ink applied to the undulating structure layer, that is, an undulating shape of a surface of the second reflective layer 5 is basically the same as an undulating shape of a surface of the undulating structure layer 2 at the corresponding position. In some embodiments, an undulating degree of the second reflective layer 5 is set to be less than an undulating degree of the surface of the undulating structure layer 2.

Referring to Fig. 3, Fig. 3 is another cross-sectional view of the optical anti-counterfeiting element shown in Fig. 2 along X-X. In the embodiment of the present invention, on the basis of the above embodiment, the optical anti-counterfeiting element further includes:
a substrate layer 1, arranged on a side of the undulating structure layer 2 away from reflective layers (referring to the first reflective layer 3 and the second reflective layer 5 in the embodiment of the present invention), that is, the non-undulating side of the undulating structure layer 2;
a protective layer 4, arranged on a side of the undulating structure layer 2 away from the substrate layer 1, specifically, a side of the first reflective layer 3 and/or the second reflective layer 5 away from the undulating structure layer; and
a functional coating 6, arranged on a side of the protective layer 4 away from the undulating structure layer 2.

It should be understood that the substrate layer 1 is at least partially transparent, or a colored dielectric layer, or a transparent dielectric film with a functional coating on a surface, or a composite multilayer film. For a material reversal of the substrate layer 1, the substrate layer 1 is formed by a film material with good physical and chemical resistance and high mechanical strength. For example, a polyethylene terephthalate (PET) film, a polyethylene naphthalate (PEN) film, a polypropylene (PP) film and other plastic films are configured to form the substrate layer 1. In the embodiment of the present invention, the substrate layer 1 is formed by the PET material.

Further, a bonding reinforcement layer (not shown) is arranged between the substrate layer 1 and the undulating structure layer 2 to enhance bonding between the substrate layer 1 and the undulating structure layer 2, and a release layer (not shown) is also arranged therebetween to facilitate separation of the substrate layer 1 from the undulating structure layer 2.

The protective layer 4 is a natural product of the product manufacturing process. Other functional coatings 6 are provided as needed, for example, a bonding layer for bonding with an applicable main product or a protective layer for protection, or a layer for both protection and bonding.

A manufacturing method of the optical anti-counterfeiting element according to Embodiment 2 of the present invention is described with reference to a flowchart illustration, and it will be appreciated by those skilled in the art that the manufacturing method includes steps S1 to S3.

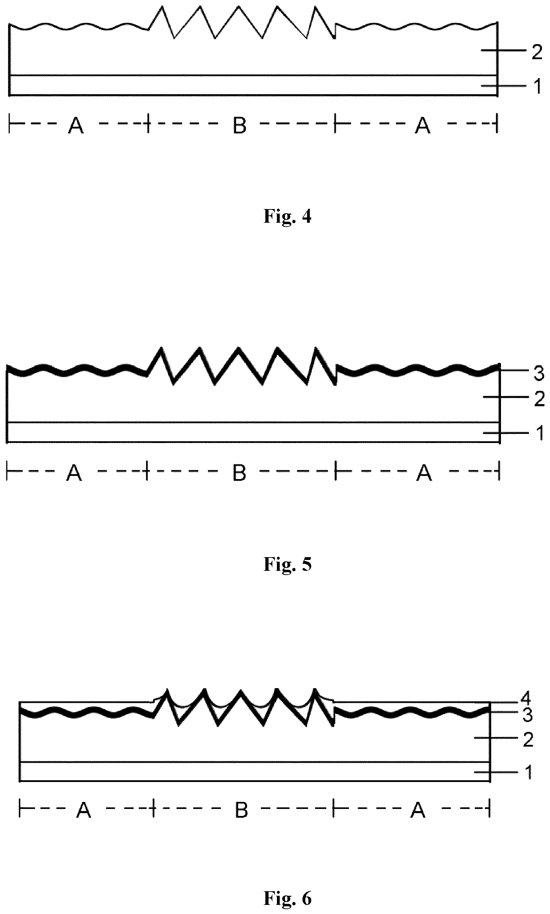

Referring to Fig. 4, Fig. 4 is a structural schematic diagram of step S1 of the manufacturing method of the optical anti-counterfeiting element according to the embodiment of the present invention.

S1. Forming an undulating structure layer 2 on a substrate layer 1.

It should be understood that the undulating structure layer 2 is made by a jig for fixing the substrate layer 1. The substrate layer 1 is at least partially transparent, or a colored dielectric layer, or a transparent dielectric film with a functional coating on a surface, or a composite multilayer film. The substrate layer 1 is generally formed by a film material with good physical and chemical resistance and high mechanical strength. For example, a polyethylene terephthalate (PET) film, a polyethylene naphthalate (PEN) film, a polypropylene (PP) film and other plastic films are configured to form the substrate layer 1. In an embodiment, the substrate layer 1 is formed by the PET material. The substrate layer 1 includes a bonding reinforcement layer to enhance the bonding between the substrate layer 1 and the undulating structure layer 2, and also includes a release layer to facilitate separation of the substrate layer 1 from the undulating structure layer 2.

The undulating structure layer 2 is duplicated in batches by UV casting, molding, nanoimprinting, and other processing methods. For example, the undulating structure layer 2 is formed from thermoplastic resin by a molding process, that is, the thermoplastic resin pre-printed on the substrate layer 1 is softened and deformed by heat when passing through a high-temperature metal stencil so as to form a particular undulating structure, and is then cooled and molded. The undulating structure layer 2 is also formed by a radiation-curing casting process, that is, radiation-curable resin is printed on the substrate layer 1, and an original plate is pushed onto the substrate layer while the substrate layer is irradiated with radioactive rays such as ultraviolet light or electron beams, so that the above material is cured, then the original plate is removed, and the undulating structure layer 2 is formed.

The undulating structure layer 2 at least includes a first area A formed by a first microstructure, and a second area B adjacent to the first area and formed by a second microstructure. A specific volume of the first microstructure is less than a specific volume of the second microstructure. Shapes and specific structure parameters of the first microstructure and the second microstructure are set based on a desired optical effect. For example, if the first microstructure is an optical microstructure with an embossed effect, a cross-section thereof is a blazed grating structure with a variable width of 2µm to 20µm and a specific volume of about 1µm³/µm²; and if the second microstructure is an optical microstructure with a holographic effect, a cross-section thereof is a sinusoidal grating structure with a specific volume of about 0.1µm³/µm².

Referring to Fig. 5, Fig. 5 is a structural schematic diagram of step S2 of the manufacturing method of the optical anti-counterfeiting element according to the embodiment of the present invention.

S2: Forming, in the first area, a first reflective layer located in the first area.

It should be understood as forming the first reflective layer 3 located in the first area A but not in the second area B. In the embodiment of the present invention, specifically, there are three sub-steps as follows:
S2-1: Forming a material of the first reflective layer 3 on the undulating structure layer 2 by a vapor deposition, as shown in Fig. 5. A vapor deposition method specifically includes, but is not limited to, thermal evaporation, electron beam evaporation, magnetron sputtering, etc. In an embodiment, the material of the first reflective layer 3 is formed on the undulating structure layer 2 with a uniform surface density in a homotypically located or basically homotypically located manner. In an embodiment, the material of the first reflective layer 3 is aluminum, with a thickness of 30nm.

Referring to Fig. 6, Fig. 6 is a structural schematic diagram of step S2-2 of the manufacturing method of the optical anti-counterfeiting element according to the embodiment of the present invention. The step of forming, in the first area, a first reflective layer located in the first area further includes:
S2-2: Forming a material of a protective layer 4 on the material of the first reflective layer 3, as shown in Fig. 6

The material of the protective layer 4 is generally formed by a wet coating process. In term of a forming area, the material of the protective layer is able to be formed within the whole area of a film (referred to as a coating process), or within a local area of the film (referred to as a printing process). In terms of specific implementation technology, there are spraying, roller coating, spin coating, flexographic printing, intaglio printing, screen printing, etc. The protective layer 4 plays a role in protecting the material of the first reflective layer 3 in the image area A in a hollowing process. The material of the protective layer 4 needs to be applied in such an amount that the minimum thickness of the material of the protective layer on the material of the first reflective layer 3 in the image area A is significantly less than that of the material of the protective layer on the material of the first reflective layer 3 in the hollowed-out area B. Generally, a position, with the minimum thickness, of a coating is located on the top of a microstructure. The material of the protective layer 4 is applied generally in an amount of greater than 0.1 g/m² and less than 0.5 g/m². Thus, in a corrosive atmosphere capable of reacting with the material of the first reflective layer 3 in the subsequent hollowing process, the protective layer 4 provides effective protection for the material of the first reflective layer 3 in the image area A, but not for the material of the first reflective layer 3 in the hollowed-out area B. Main resin of the protective layer 4 is formed by polyurethane, acrylic, polyester, or a combination thereof.

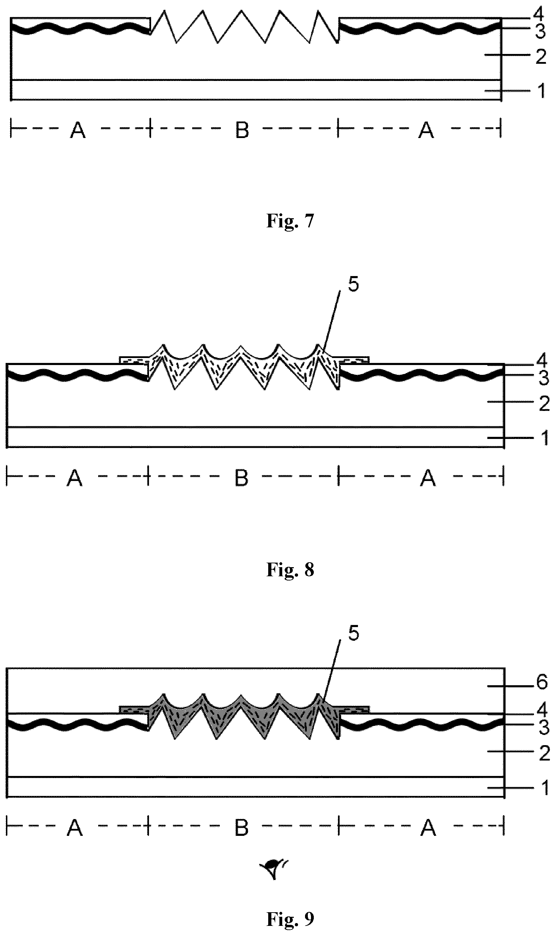

Referring to Fig. 7, Fig. 7 is a structural schematic diagram of step S2-3 of the manufacturing method of the optical anti-counterfeiting element according to the embodiment of the present invention. The step of forming, in the first area, a first reflective layer located in the first area further includes:
S2-3: Placing a semi-finished product obtained in S2-2 into an atmosphere capable of reacting with the material of the first reflective layer 3 to remove all or a part of the material of the first reflective layer 3 located in the second area B, as shown in Fig. 7.

As mentioned before, the minimum thickness of the material of the protective layer 4 on the material of the first reflective layer 3 in the image area A is significantly less than that of the material of the protective layer on the material of the first reflective layer 3 in the hollowed-out area B. Thus, in the corrosive atmosphere capable of reacting with the material of the first reflective layer 3, the corrosive atmosphere reaches the material of the first reflective layer 3 below through a weak point (that is, corresponding to the top of the microstructure) of the material of the protective layer 4 in the hollowed-out area B, and carries out a corrosion reaction on the material of the first reflective layer. Meanwhile, the material of the protective layer 4 located in image area A effectively protects the material of the first reflective layer 3 below. Thus, the first reflective layer 3 located precisely in the first area A is obtained. In an embodiment, the material of the first reflective layer 3 is aluminum, and the corrosive atmosphere is lye or acid, for example, an NaOH solution or a sulfuric acid solution.

Referring to Fig. 8, Fig. 8 is a structural schematic diagram of step S3 of the manufacturing method of the optical anti-counterfeiting element according to the embodiment of the present invention. The manufacturing method further includes:
S3: Forming a second reflective layer 5 located at least in the second area B, the second reflective layer 5 is formed by a wet coating process.

In the embodiment, the second reflective layer 5 is a metallic ink coating. A raw material of the metallic ink coating is a liquid metallic ink formed by a metallic flake particle pigment (for example, a metallic pigment presenting a gold color), a resin binder, and a solvent. The wet coating process is intaglio coating, spray coating, dip coating, spin coating, intaglio printing, flexographic printing, screen printing, undulating printing, etc. In order to save raw materials and/or to present an effect of a super multi-color reflective layer, a local printing process is adopted, that is, the second reflective layer 5 is formed merely in the second area B and a small part of the first area surrounding the second area B. After being dried, the metallic flake particle pigment is basically parallel to an inclined plane of the second microstructure, so that a desired microstructure optical effect may be formed.

### Embodiment 3

An embodiment of the present invention further provides a post-treatment process following step S3, that is, a functional coating 6 is applied as required, for example, a bonding layer for bonding with a main product.

Continuing to refer to Fig. 9, Fig. 9 is another cross-sectional view of the exemplary optical anti-counterfeiting element shown in Fig. 1 along X-X according to Embodiment 2 of the present invention. The optical anti-counterfeiting element includes a substrate layer 1, an undulating structure layer 2, a first reflective layer 3, a protective layer 4, a second reflective layer 5, and the functional coating 6. The undulating structure layer 2 at least includes a first area A formed by a first microstructure (for example, a microstructure presenting a holographic effect), and a second area B adjacent to the first area and formed by a second microstructure (for example, a microstructure presenting an embossed effect). A specific volume of the first microstructure is less than a specific volume of the second microstructure. When observing from a side of the substrate layer, the first reflective layer 3 is strictly located in the first area A, and the second reflective layer 5 is strictly located in the second area B. The second reflective layer 5 is a coating with a different visual effect from the first reflective layer 3, and is formed by a wet coating process. In the embodiment, the second reflective layer 5 is a coating of a mixture of a metallic ink and a color pigment. Compared with a single metallic ink in Embodiment 1, the color pigment provides rich selections of colors for the reflective layer, thereby having a better visual effect. The metallic flake particle pigment is basically parallel to an inclined plane of the second microstructure, so that a desired microstructure optical effect is ensured. The protective layer 4 is a natural product of the product manufacturing process. The functional coating 6 is provided as needed, for example, a bonding layer for bonding with a main product.

### Embodiment 4

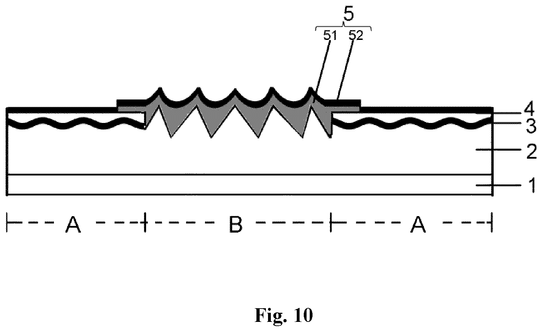

Fig. 10 is another cross-sectional view of the optical anti-counterfeiting element shown in Fig. 1 along X-X according to Embodiment 3 of the present invention. The optical anti-counterfeiting element includes a substrate layer 1, an undulating structure layer 2, a first reflective layer 3, a protective layer 4, a second reflective layer 5 (including a color sublayer 51 of the second reflective layer and a reflective sublayer 52 of the second reflective layer), and a functional coating 6. The undulating structure layer 2 at least includes a first area A formed by a first microstructure (for example, a microstructure presenting a holographic effect), and a second area B adjacent to the first area and formed by a second microstructure (for example, a microstructure presenting an embossed effect). A specific volume of the first microstructure is less than a specific volume of the second microstructure. When observing from a side of the substrate layer, the first reflective layer 3 is strictly located in the first area A, and the second reflective layer 5 is strictly located in the second area B. The color sublayer 51 of the second reflective layer 5 provides rich selections of highly saturated colors for the reflective layer, and the reflective sublayer 52 of the second reflective layer 5 provides a high-brightness reflection function. Compared with Embodiment 2, the multilayer second reflective layer 5 has higher brightness and color saturation, thereby having a better visual effect. The protective layer 4 is a natural product of the product manufacturing process. The functional coating 6 is provided as needed, for example, a bonding layer for bonding with a main product.

The manufacturing method of the optical anti-counterfeiting element according to the present invention is suitable for manufacturing a windowed security thread, a label, a logo, a wide strip, a transparent window, a cover film, etc. Security paper with the windowed security thread is configured to prevent counterfeiting of banknotes, passports, securities and other high-security products.

The foregoing merely exemplarily illustrates specific embodiments of the present invention. However, those skilled in the art should understand that various equivalent transformations or modifications may be made to the present invention without deviating from the idea and spirit of the present invention, and the resulting technical solutions shall also fall within the scope of protection of the present invention.

An embodiment of the present invention further provides an anti-counterfeiting product. The anti-counterfeiting product includes the above-mentioned optical anti-counterfeiting element. The optical anti-counterfeiting element is transferred or pasted to the anti-counterfeiting product in the form of a logo, a hot-stamped wide strip, a sticker, a security thread, etc. to achieve an anti-counterfeiting effect.

It is also to be noted that the terms "comprise", "include", or any other variation thereof, are intended to cover a non-exclusive inclusion, such that a process, method, article, or apparatus that includes a list of elements not only include those elements, but also includes other elements not expressly listed or elements inherent to such process, method, article, or apparatus. An element proceeded by the phrase "comprises a" does not, without more constraints, preclude the existence of additional identical elements in the process, method, article, or apparatus that includes the element.

The foregoing is merely embodiments of the present invention, and is not intended to limit the present invention. It will be apparent to those skilled in the art that various modifications and variations may be made to the present invention. Any modifications, equivalents, improvements, etc. that come within the spirit and principle of the present invention shall fall within the scope of the claims of the present invention.

## Claims

1. An optical anti-counterfeiting element, comprising:
an undulating structure layer (2), comprising a first surface and a second surface opposite to each other, the second surface comprises a first area and a second area, and the first area has a first microstructure, the second area has a second microstructure, and the first microstructure is different from the second microstructure;
a first reflective layer (3), located on the first area; and
a second reflective layer (5), located at least on the second area,
when observing from one side of the first surface, the first area and the second area have visual features presented by the first reflective layer (3) and the second reflective layer (5) respectively.

2. The optical anti-counterfeiting element as claimed in claim 1, wherein the first reflective layer (3) has an undulating shape corresponding to the first microstructure, and the second reflective layer (5) has an undulating shape corresponding to the second microstructure.

3. The optical anti-counterfeiting element as claimed in claim 2, wherein at least one of the first area and the second area comprises a pattern,
the pattern comprises a line and a dot, and both of a width of the line and a diameter of the dot are less than 0.25mm; or
the pattern comprises the line, and the width of the line is less than 0.25mm; or
the pattern comprises the dot, and the diameter of the dot is less than 0.25mm.

4. The optical anti-counterfeiting element as claimed in claim 2, wherein
the first microstructure or the second microstructure comprises at least one of a periodic structure and an aperiodic structure; and
a cross-sectional structure of the first microstructure or the second microstructure along an extension direction comprises at least one of a sinusoidal structure, a rectangular grating structure, a trapezoidal grating structure, a blazed grating structure and an arc grating structure.

5. The optical anti-counterfeiting element as claimed in claim 1, wherein a specific volume of the first microstructure is less than a specific volume of the second microstructure.

6. The optical anti-counterfeiting element as claimed in claim 5, wherein
the specific volume of the first microstructure ranges from 0µm³/µm² to 0.5µm³/µm²; and
the specific volume of the second microstructure ranges from 0.4µm³/µm² to 2µm³/µm².

7. The optical anti-counterfeiting element as claimed in claim 1, wherein the first reflective layer (3) is formed by a vapor deposition process, and a material of the first reflective layer (3) comprises at least one of aluminum, silver, copper, tin, chromium, nickel and titanium.

8. The optical anti-counterfeiting element as claimed in claim 1, wherein a thickness of the first reflective layer (3) ranges from 10nm to 80nm.

9. The optical anti-counterfeiting element as claimed in claim 1, wherein the first reflective layer (3) is a multilayer interference optically variable coating.

10. The optical anti-counterfeiting element as claimed in claim 1, wherein the second reflective layer (5) or a sublayer of the second reflective layer (5) is formed by a wet coating process.

11. The optical anti-counterfeiting element as claimed in claim 9, wherein the multilayer interference optically variable coating comprises a mirror layer, a dielectric layer and an absorption layer, and the absorption layer is arranged adjacent to the undulating structure layer (2);
a material of the mirror layer comprises at least one of aluminum, silver, copper, tin, chromium, nickel and titanium;
a material of the dielectric layer comprises at least one of MgF₂, SiO₂, ZnS, TiN, TiO₂, TiO, Ti₂O₃, TisOs, Ta₂O₅, Nb₂O₅, CeO₂, Bi₂O₃, Cr₂O₃, Fe₂O₃, HfO₂ and ZnO; and
the absorption layer comprises at least one of nickel, chromium, aluminum, silver, copper, tin and titanium.

12. The optical anti-counterfeiting element as claimed in claim 1, wherein the second reflective layer (5) is a coating formed by a metallic ink or a coating formed by a mixture of the metallic ink and a color pigment.

13. The optical anti-counterfeiting element as claimed in claim 12, wherein the metallic ink is an optically variable ink.

14. The optical anti-counterfeiting element as claimed in claim 13, wherein a metallic pigment of the metallic ink is an aluminum microchip.

15. The optical anti-counterfeiting element as claimed in any one of claims 12-14, wherein an average diameter of a pigment flake particle of the metallic ink is less than a width of a cross-section of the second microstructure.

16. The optical anti-counterfeiting element as claimed in claim 15, wherein the average diameter of the pigment flake particle of the metallic ink is less than 10µm.

17. The optical anti-counterfeiting element as claimed in claim 1, wherein the second reflective layer (5) comprises:
a reflective sublayer, located at least on the second area; and
a color ink sublayer, located on the reflective sublayer,
the color ink sublayer is formed by a wet coating process.

18. The optical anti-counterfeiting element as claimed in claim 17, wherein the color ink sublayer has an undulating shape corresponding to the second microstructure.

19. The optical anti-counterfeiting element as claimed in claim 18, wherein the color ink sublayer is applied in an amount ranging from 0.1g/m² to 1g/m².

20. The optical anti-counterfeiting element as claimed in any one of claims 1-14, **characterized by** further comprising:
a substrate layer (1), arranged on the first surface of the undulating structure layer (2);
a protective layer (4), the protective layer is arranged on the first reflective layer (3) and the second reflective layer (5); or the protective layer (4) is arranged on the first reflective layer (3); or the protective layer (4) is arranged on the second reflective layer (5); and
a functional coating (6), arranged on the protective layer (4).

21. An anti-counterfeiting product, comprising the optical anti-counterfeiting element as claimed in any one of claims 1-20.

22. The anti-counterfeiting product as claimed in claim 21, wherein the anti-counterfeiting product comprises one of the following: a logo, a hot-stamped wide strip, a sticker, and a security thread.

23. A manufacturing method of an optical anti-counterfeiting element, comprising:
forming an undulating structure layer (2), the undulating structure layer (2) comprises a first surface and a second surface opposite to each other, the second surface comprises a first area and a second area, the first area has a first microstructure, the second area has a second microstructure, and the first microstructure is different from the second microstructure;
forming, in the first area, a first reflective layer (3) only located in the first area; and
forming, in the second area, a second reflective layer (5) located at least in the second area, the second reflective layer (5) or a sublayer of the second reflective layer (5) is formed by a wet coating process.

24. The manufacturing method of the optical anti-counterfeiting element as claimed in claim 23, wherein the forming, in the first area, the first reflective layer (3) only located in the first area comprises:
Forming a material of the first reflective layer (3) on the undulating structure layer (2) by a vapor deposition;
forming a protective layer (4) on the material of the first reflective layer (3); and
placing a semi-finished product into an atmosphere capable of reacting with the material of the first reflective layer (3) to remove all or a part of the material of the first reflective layer (3) located in the second area.
